# EUROPEAN PATENT SPECIFICATION

(11) **EP 0 395 979 B1**
(45) Date of publication and mention of the grant of the patent: **29.06.1994**
(21) Application number: 90107683.6
(22) Date of filing: 23.04.1990
(51) Int. Cl.: G21C 3/62

(54) **Method of making a UO2 fuel pellet**
Verfahren zur Herstellung von UO2 Kernbrennstofftabletten
Méthode de fabrication de pastilles de combustible nucléaire à base d'UO2

(30) Priority: 05.05.1989 US 347974
(43) Date of publication of application: 07.11.1990
(73) Proprietor: SIEMENS AKTIENGESELLSCHAFT, 80333 München (DE)
(72) Inventor: Jentzen, William Richard, Kennewick, Washington 99337 (US); Didway, Johnny Alan, Kennewick, Washington 99336 (US)

(56) References cited:
- EP-A- 0 277 708
- DE-A- 3 802 048
- FR-A- 1 520 531
- DERWENT FILE SUPPLIER JAPS/JPO, Derwent Publications, London, GB; & JP-A-61 222 206

## Description

### Technical Field

The invention relates to the fabrication of uranium dioxide pellets for use as nuclear reactor fuel where the pellets are formed by pressing and sintering.

### Background of the Invention

Commercially operated nuclear reactors for electrical power are generally fueled by enriched uranium dioxide pellets sealed inside a metal cladding tube. The pellets are pressed from a highly sinterable ceramic-grade uranium dioxide powder to form unfired, or "green" pellets, which are then fired in a furnace in a controlled ambient gas until they take on the desired sintered characteristics. The characteristics of the ceramic powder, as well as a description of the pressing process and of various additives used in such a process are described, for example, in U.S. patent 4.430.276 issued Feb. 7, 1984 to Radford et al. This patent discloses that the addition of certain metal oxides to the sintering powder, can result in desirable changes, such as by increasing the grain size in the microstructure of the finished pellet.

The step of pressing the powder to form a green pellet requires the addition of a die lubricant to the press tooling or to the ceramic powder itself, or both, in order to reduce friction during pressing and to ensure an undamaged release of the green pellet from the tooling. The addition of lubricants to ceramic powder prior to pressing is a technique recognized in the ceramic art in general and in the uranium dioxide pelletizing art in particular. Metallic soaps are considered especially useful for this purpose. Various metallic soap compounds have been disclosed previously as being useful for this purpose. Among the candidates, zinc stearate is widely used in a powder form as an additive blended with the ceramic powder.

When the green pellets which have been pressed with a zinc stearate lubricant are fired, the stearate organic components are volatilized and removed from the furnace as fugitives. The zinc metallic component is also vaporized and removed from the pellets. However, within the furnace gas the zinc forms oxides which deposit on the walls of the furnace and in the flue. The resulting depositions are troublesome contaminants.

### Summary of the Invention

In accordance with the novel method of the present invention, a dry lubricant consisting of a stearate of aluminum is added to the uranium dioxide sintering powder and dry blended with it prior to the pressing of green pellets. The aluminum hydroxide distearate is highly effective as a die lubricant. Furthermore, while the distearate radical is removed as a fugitive in the course of the sintering process, the aluminum hydroxide component is converted to aluminum oxide, or alumina particles, which function as a grain size control agent by promoting larger grain sizes which are favorable for effectively containing fission products within the pellets during a fuel burnup cycle.

### Brief Description of the Drawings

FIG. 1 is an elevated perspective of a sintered pellet made in accordance with the present invention.

FIG. 2 is a flow chart describing the steps of the novel process.

### Detailed Description

In the process of the invention, aluminum hydroxide distearate powder, i.e. Al(OH) (C₁₈H₃₅O₂)₂, is mixed together in dry powder form with a dry uranium oxide ceramic powder. The ceramic powder may have minor quantities of other additives, such as burnable poisons, plutonium, etc. in addition to the uranium dioxide itself, but for convenience will be referred to herein simply as "ceramic powder." The amount of aluminum hydroxide distearate added is 0.1 to 0.4 weight percent of the ceramic powder base.

The function of the aluminum hydroxide distearate is two-fold. First, it becomes a direct replacement for zinc stearate as the die lubricant used in the pellet pressing. The aluminum hydroxide distearate is added by the same procedure and blending process as zinc stearate. Lubricating qualities of aluminum hydroxide distearate and zinc stearate are substantially equivalent. Second, the aluminum metal of the compound is not fugitive, but becomes bonded throughout the fuel oxide matrix as a fuel stabilizing agent, a function previously performed by added alumina powder. Alumina at these concentrations also increases grain size in the sintered pellet an additional 2-5 micrometer beyond the grain size obtained when no alumina is present. Controlled grain size is necessary to regulate the fission gas release while the fuel is in service. Aluminum stearate and alumina additives provide equivalent grain size results when compared directly in terms of the molar concentration of aluminum atoms.

An important additional advantage of using aluminum hydroxide distearate to replace zinc stearate and alumina is the benefit of increasing the pellet end capping threshold (ECT). This threshold refers to the maximum pressing pressure which is feasible for obtaining an acceptable pellet yield. Direct comparison tests have shown that aluminum hydroxide distearate will permit pellet pressing to higher green density parameters without the spurious formation of so-called "end cap flaws" in the form of microfissures in the end face when the green pellet is removed from the die. Instead, it results in the production of stronger green pellets and thus increases product yield.

### EXAMPLE I

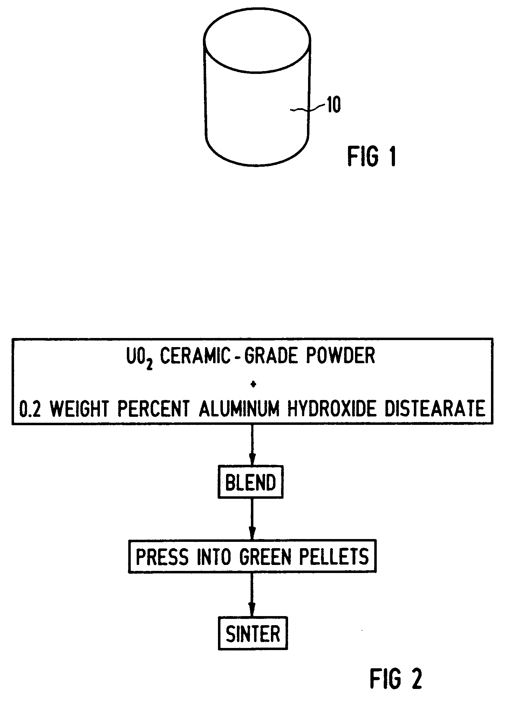

In one example of the process in accordance with the invention, a nuclear fuel pellet 10 shown in FIG. 1 is manufactured by a process as described in general terms by the flow chart of FIG. 2. In the process, a steel drum containing 200 kilograms of highly sinterable uranium dioxide ceramic powder which was precompacted and granulated in particles less than 1.6 mm with moisture content less than 2000 ppm H₂O/UO₂, of which about 12% is U₃O₈, an oxidized form of uranium dioxide which results from processing of scrap pellets for reuse, has added to it 400 grams of aluminum hydroxide distearate, amounting to 0.2 weight percent. The aluminum hydroxide distearate is "technical grade" dry powder material which typically contains about 19% total ash, about 4.5% free fatty acids, and about 0.5% moisture. It has a particle size such that 98% will pass through a 74 micrometer screen, 95% will pass through a 44 micrometer screen, and all particles will pass through a 210 micrometer screen. The powders are blended for 5-15 minutes by a drum tumbling machine until uniformly mixed.

The blended powder mix is next loaded into a mechanical pelletizing machine which presses it into green pellets with a force of between 27,58 x 10⁷ Pa (40,000 psi) and 51,71 x 10⁷ Pa (75,000 psi), depending upon the particular properties of the powder mix.

The green pellets are loaded on trays and fed into a firing furnace in a reducing atmosphere with water vapor controlled for a dew point from 21-35 degrees Celsius and fired at 1700-1780 degrees Celsius for 2-3 hours, after which they are cooled at room temperature. At this point the sintering process is complete and the pellets may be processed further in other respects.

### EXAMPLE II

In another example of a process in accordance with the present invention, all the steps and quantities are the same as in EXAMPLE I above, with the exception of the added die lubricant. In this case the lubricant is aluminum hydroxide tristearate. It is added in the amount of 0.28 weight percent. A greater relative quantity of the aluminum hydroxide tristearate is required than was of the aluminum distearate because the amount of the aluminum element in the compound is critical in stabilizing the grain size of the sintered product. Therefore, the amount of the stearate of aluminum added, regardless of the nature of the stearate radical, should be based on the aluminum element being in a concentration of 0.025 to 0.335 molar percent (30-250 microgram Al/gram U) of the blended powder mix.

The aluminum tristearate exhibits excellent lubrication properties for this application. However, the nature of the manufacturing process for the aluminum tristearate is at present such that the product is presently not normally available without a substantial proportion of excessively large particles. The large particles result in excessively large pore sizes in the sintered pellets, which lead to defects. It is nevertheless contemplated that aluminum hydroxide tristearate would be useful for this purpose if obtainable in an appropriate powder form. Its lubricating properties are acceptable, whereas those of aluminum hydroxide monostearate are not sufficient. Higher proportions of aluminum hydroxide monostearate provide excessive amounts of aluminum dopants in proportion to stearate radicals for lubrication.

The process of the present invention is to be distinguished from processes in which metals and/or lubricants are added in a fluid state, such as a slurry. Wet processes, when used for fissionable materials, require serious consideration of possible criticality conditions for the mix. In addition, wet processing makes it difficult to control the concentrations of the constituents, due to settling and other phenomena which degrade homogeneity of a suspension. The dry mixing of the compounds, on the other hand, is relatively free of such considerations and readily provides close control of the constituent proportions.

## Claims

1. A process of making a nuclear fuel pellet, comprising:
adding a stearate of aluminum in a dry powder form to the fuel ceramic powder;
blending the stearate of aluminum and the ceramic fuel powder to form a uniform blended mix;
pressing the mix into green fuel pellets, and
sintering the green pellets to drive out the stearate, leaving the aluminum as an oxide in the pellets.

2. The process in accordance with claim 1 wherein the added stearate of aluminum is aluminum hydroxide distearate.

3. The process in accordance with claim 2 wherein the aluminum hydroxide stearate is in an amount of 0.1 to 0.4 weight percent of the fuel ceramic powder to which it is added.

4. The process in accordance with claim 3 wherein the aluminum hydroxide stearate is in an amount of about 0.2 weight percent of the fuel ceramic powder to which it is added.

## Patentansprüche

1. Verfahren zur Herstellung einer Kernbrennstofftablette, umfassend die Schritte:
Zugabe eines Aluminiumstearats in Trockenpulverform zum Brennstoffkeramikpulver;
Vermischen des Aluminiumstearats und des keramischen Brennstoffpulvers unter Bildung eines einheitlichen Gemischs;
Pressen des Gemischs zu grünen Brennstofftabletten, sowie
Sintern der Grüntabletten zum Austreiben des Stearats, wobei das Aluminium als Oxid in den Tabletten zurückbleibt.

2. Verfahren nach Anspruch 1, worin das zugegebene Aluminiumstearat Aluminiumhydroxid-distearat ist.

3. Verfahren nach Anspruch 2, worin die Menge an Aluminiumhydroxid-stearat 0,1 bis 0,4 Gewichtsprozent, bezogen auf das Brennstoffkeramikpulver, dem es zugegeben wird, beträgt.

4. Verfahren nach Anspruch 3, worin die Menge an Aluminiumhydroxid-stearat etwa 0,2 Gewichtsprozent, bezogen auf das Brennstoffkeramikpulver, dem es zugegeben wird, beträgt.

## Revendications

1. Procédé de fabrication de pastilles de combustible nucléaire, qui consiste :
à ajouter un stéarate d'aluminium sous forme de poudre sèche à de la poudre céramique de combustible;
à mélanger le stéarate d'aluminium et la poudre de combustible céramique en un mélange uniforme;
à comprimer le mélange en des pastilles à vert de combustible, et
à fritter les pastilles à vert pour extraire le stéarate en laissant l'aluminium en tant qu'oxyde dans les pastilles.

2. Procédé suivant la revendication 1, dans lequel le stéarate d'aluminium, qui est ajouté, est du distéarate d'hydroxyde d'aluminium.

3. Procédé suivant la revendication 2, dans lequel le stéarate d'hydroxyde d'aluminium représente de 0,1 à 0,4 pour cent du poids de la poudre céramique de combustible auquel il est ajouté.

4. Procédé suivant la revendication 3, dans lequel le stéarate d'hydroxyde d'aluminium représente 0,2 pour cent environ du poids de la poudre céramique de combustible auquel il est ajouté.
